# EUROPEAN PATENT APPLICATION

(11) **EP 3 486 837 A1**
(43) Date of publication of application: **22.05.2019**
(21) Application number: 18207498.9
(22) Date of filing: 21.11.2018
(51) Int. Cl.: G06K 9/00, G06K 9/20

(54) **METHOD OF IDENTIFYING VEHICLE, APPARATUS, INSPECTION SYSTEM AND ELECTRONIC DEVICE USING THE SAME, AND STORAGE OF THE SAME**

(30) Priority: 21.11.2017 CN 201711168395
(71) Applicant: Nuctech Company Limited, Beijing 100084 (CN)
(72) Inventor: YAO, Yang, BEIJING, 100084 (CN); XU, Yanwei, BEIJING, 100084 (CN); LI, Jianmin, BEIJING, 100084 (CN); WANG, Yongming, BEIJING, 100084 (CN); LI, Yulan, BEIJING, 100084 (CN); YU, Weifeng, BEIJING, 100084 (CN); LI, Yuanjing, BEIJING, 100084 (CN); CHEN, Zhiqiang, BEIJING, 100084 (CN); ZONG, Chunguang, BEIJING, 100084 (CN); ZHANG, Li, BEIJING, 100084 (CN)
(74) Representative: Cabinet Beau de Loménie

(57) **Abstract**

The present disclosure discloses a method of identifying a vehicle, an apparatus, a vehicle inspection system, a storage medium and an electronic device. The method of identifying a vehicle includes: photographing (S1) a vehicle to be identified by a linear array camera, to obtain a plurality of linear array images of the vehicle to be identified; performing (S2) distortion correction on the plurality of linear array images based on corresponding motion speeds of the vehicle to be identified, so as to obtain a plurality of corrected images; combining (S3) the plurality of corrected images, so as to obtain a body image of the vehicle to be identified; identifying (S4) a type of the vehicle to be identified in the body image according to a first pattern recognition algorithm; and identifying (S5) a number of the vehicle to be identified in the body image according to a second pattern recognition algorithm.

## Description

### TECHNICAL FIELD

The present disclosure relates to the field of vehicle identification and vehicle safety inspection technology, and particularly to a method of identifying a vehicle, an apparatus using the method, a vehicle inspection system using the method, a storage medium of the method and an electronic device using the method.

### BACKGROUND

After entering the 21^{st} century, China has entered a period of rapid development in national economy. With the continuous improvement of living standards of the people, the total amount of automobiles grows rapidly as well. Requirements for vehicle management are getting higher and higher as well. Vehicle entrances and exits of parking lots, highway toll stations, government agencies, and communities need to be identified according to specific needs.

For example, in the field of vehicle safety inspection, it is necessary to inspect container trucks and various trucks without stopping these vehicles, and automatically identify the number on the container truck or truck to achieve the binding of the vehicle number with the image, so as to greatly improve the efficiency of security inspection. In this case, the driver is required to drive through the radiation area, and since the energy and dose of the accelerator or radiation source are usually high, the driver is greatly injured, so, it is particularly important to accurately identify the vehicle type and the vehicle number, so as to control the radiation source according to the type of the vehicle not to irradiate the cab or reduce dose.

At present, a commonly-used manner is to obtain vehicle contour information by installing a light curtain or a regional laser scanner in the detection passage, and identify the type of the vehicle based on the contour information of the vehicle. Consequently, the body image of the vehicle is photographed by an area array camera installed in the detection passage, then the number of the vehicle is identified by a manner of image recognition.

In the above manner, image information obtained by the light curtain is too little to recognize the type and number of the vehicle at the same time, and the installation is complicated; the image obtained by the regional laser scanner is high in cost and is easily affected by the environment; and when the image body of the vehicle is photographed by the area array camera, it is pretty greatly affected by the vehicle speed, so that the recognition accuracy is low.

It should be noted that, the above information disclosed in the background section is only for enhancing the understanding of the background of the present disclosure, and thus may include information that does not constitute prior art known to those of ordinary skill in the art.

### SUMMARY

An object of the present disclosure is to provide a method of identifying a vehicle, an apparatus using the method, a vehicle inspection system using the method, a storage medium of the method and an electronic device using the method, thereby at least to some extent, overcoming one or more problems due to limitations and disadvantages of the related art.

According to the first aspect of the present disclosure, a method of identifying a vehicle is provided, including:
- photographing a vehicle to be identified by a linear array camera, to obtain a plurality of linear array images of the vehicle to be identified;
- performing distortion correction on the plurality of linear array images based on corresponding motion speeds of the vehicle to be identified, so as to obtain a plurality of corrected images;
- combining the plurality of corrected images, so as to obtain a body image of the vehicle to be identified;
- identifying a type of the vehicle to be identified in the body image according to a first pattern recognition algorithm; and
- identifying a number of the vehicle to be identified in the body image according to a second pattern recognition algorithm.

In an exemplary embodiment of the present disclosure, the step of photographing the vehicle to be identified by the linear array camera to obtain the plurality of linear array images of the vehicle to be identified includes:
- providing an LED light source, and controlling the LED light source to be operated in an operation mode, wherein the operation mode is to control the LED light source to enhance illumination brightness and flicker at a high frequency; and
- in the operating mode of the LED light source, photographing the vehicle to be identified by the linear array camera, so as to obtain the plurality of linear array images of the vehicle to be identified.

In an exemplary embodiment of the present disclosure, the LED light source adopts a LED light source with a narrow illumination angle.

In an exemplary embodiment of the present disclosure, the method further includes obtaining brightness of photographing environment in real time, then adjusting exposure time of the linear array camera according to the brightness of the photographing environment.

In an exemplary embodiment of the present disclosure, the step of performing distortion correction on the plurality of linear array images based on corresponding motion speeds of the vehicle to be identified, so as to obtain a plurality of corrected images includes controlling the linear array camera to continuously photograph the vehicle to be identified according to a preset photographing frequency, so as to obtain the plurality of linear array images of the vehicle to be identified.

In an exemplary embodiment of the present disclosure, the step of performing distortion correction on the plurality of linear array images based on corresponding motion speeds of the vehicle to be identified, so as to obtain a plurality of corrected images includes:
- respectively obtaining corresponding motion speeds of the vehicle to be identified when the respective linear array images are photographed; and
- based on the corresponding motion speeds of the vehicle to be identified when respective linear array images are photographed, and in combination with motion speeds determined according to the corresponding preset photographing frequencies, performing a process of horizontally compressing or horizontally stretching on the respective linear array images respectively, so as to obtained the plurality of corrected images.

In an exemplary embodiment of the present disclosure, the step of controlling the linear array camera to continuously photograph the vehicle to be identified according to a preset photographing frequency, so as to obtain the plurality of linear array images of the vehicle to be identified includes:
- obtaining a motion speed of the vehicle to be identified in real time, then adjusting the preset photographing frequency according to the motion speed of the vehicle to be identified; and
- controlling the linear array camera to continuously photograph the vehicle to be identified according to the adjusted preset photographing frequency, so as to obtain the plurality of linear array images of the vehicle to be identified.

In an exemplary embodiment of the present disclosure, both the first pattern recognition algorithm and the second pattern recognition algorithm are any one of a proximity algorithm, a Bayesian algorithm, a principal component analysis algorithm, a linear discriminant analysis algorithm and a Gaussian mixture model.

In an exemplary embodiment of the present disclosure, the step of identifying a number of the vehicle to be identified in the body image according to a second pattern recognition algorithm includes:
- determining whether the type of the vehicle to be identified is a preset type; and
- when the type of the vehicle to be identified is the preset type, identifying the number of the vehicle to be identified in the body image according to the second pattern recognition algorithm.

In an exemplary embodiment of the present disclosure, the preset type is a van.

According to the second aspect of the present disclosure, a apparatus of identifying a vehicle is provided, including:
- an image acquisition module, configured to photograph a vehicle to be identified by a linear array camera, to obtain a plurality of linear array images of the vehicle to be identified;
- a distortion correction module, configured to perform distortion correction on the plurality of linear array images based on corresponding motion speeds of the vehicle to be identified, so as to obtain a plurality of corrected images;
- an image combining module, configured to combine the plurality of corrected images, so as to obtain a body image of the vehicle to be identified;
- a first identification module, configured to identify a type of the vehicle to be identified in the body image according to a first pattern recognition algorithm; and
- a second identification module, configured to identify a number of the vehicle to be identified in the body image according to a second pattern recognition algorithm.

In an exemplary embodiment of the present disclosure, the image acquisition module includes:
- a light supplement unit, configured to provide an LED light source, and control the LED light source to be operated in an operation mode, wherein the operation mode is to control the LED light source to enhance illumination brightness and flicker at a high frequency; and
- an image obtaining unit, configured to, in the operating mode of the LED light source, photograph the vehicle to be identified by the linear array camera, so as to obtain the plurality of linear array images of the vehicle to be identified.

In an exemplary embodiment of the present disclosure, the LED light source adopts a LED light source with a narrow illumination angle.

In an exemplary embodiment of the present disclosure, the device further includes an adjustment module, configured to obtain brightness of photographing environment in real time, then adjust exposure time of the linear array camera according to the brightness of the photographing environment.

In an exemplary embodiment of the present disclosure, the image acquisition module includes an image obtaining unit, configured to, control the linear array camera to continuously photograph the vehicle to be identified according to a preset photographing frequency, so as to obtain the plurality of linear array images of the vehicle to be identified.

In an exemplary embodiment of the present disclosure, the distortion correction module includes:
- a speed obtaining unit, configured to respectively obtain corresponding motion speeds of the vehicle to be identified when the respective linear array images are photographed; and
- a distortion correcting unit, configured to, based on the corresponding motion speeds of the vehicle to be identified when the respective linear array images are photographed, and in combination with motion speeds determined according to the preset photographing frequencies, perform a process of horizontally compressing or horizontally stretching on the respective linear array images respectively, so as to obtained a plurality of corrected images.

In an exemplary embodiment of the present disclosure, the image obtaining unit includes:
- a speed acquisition subunit, configured to obtain a motion speed of the vehicle to be identified in real time, then adjust the preset photographing frequency according to the motion speed of the vehicle to be identified; and
- an image acquisition subunit, configured to control the linear array camera to continuously photograph the vehicle to be identified according to the adjusted preset photographing frequency, so as to obtain the plurality of linear array images of the vehicle to be identified.

In an exemplary embodiment of the present disclosure, both the first pattern recognition algorithm and the second pattern recognition algorithm are any one of a proximity algorithm, a Bayesian algorithm, a principal component analysis algorithm, a linear discriminant analysis algorithm and a Gaussian mixture model.

According to the third aspect of the present disclosure, a vehicle inspection system is provide, including the apparatus of identifying a vehicle according to the above second aspect of the present disclosure.

According to the fourth aspect of the present disclosure, a computer program is provided, which, when executing on a processor of a device of identifying a vehicle according the above second aspect of the present disclosure, performs a method of identifying a vehicle according to the above first aspect of the present disclosure correspondingly.

According to the fifth aspect of the present disclosure, an electronic device is provided, including:
- a processor; and
- a memory for storing executable instructions of the processor,
wherein the processor is configured to execute the method of identifying a vehicle according to the first aspect of the present disclosure by executing the executable instruction.

The exemplary embodiments of the present disclosure provides a method of identifying a vehicle, an apparatus using the method, a vehicle inspection system using the method, a storage medium of the method and an electronic device using the method. The method obtains a plurality of linear array images of the vehicle to be identified by a linear array camera; performs distortion correction on the plurality of linear array images based on corresponding motion speeds of the vehicle to be identified, so as to obtain a plurality of corrected images; obtains a body image of the vehicle to be identified by combining the plurality of corrected images; and finally identifies the type and number of the vehicle to be identified in the body image respectively according to a first pattern recognition algorithm and a second pattern recognition algorithm. on the one hand, the amount of information contained in the plurality of linear array images obtained by the linear array camera is large, so that the type and number of the vehicle can be simultaneously identified based on the plurality of linear array images; on the other hand, the distortion correction is performed on the plurality of linear array images based on the corresponding motion speeds of the vehicle to be identified, deformation of each linear array image is reduced, thereby the accuracy of identifying the type and number of the vehicle is improved; and, in addition, the linear array camera is small in size, and is easily to be installed and debugged, so the installation and commissioning costs can be reduced.

It shall be appreciated that the above general description and the following detailed description are merely exemplary and explanatory and shall not limit the present disclosure.

### BRIEF DESCRIPTION OF THE DRAWINGS

The above and other features and advantages of the present disclosure will become more apparent by describing exemplary embodiments thereof with reference to accompanying drawings. It is apparent that, the drawings in the following description are only some of the embodiments of the present disclosure, and from these drawings, other drawings may be obtained by those of ordinary skill in the art without paying out inventive labors. In the drawing:
- Fig. 1 is a flow chart of a method of identifying a vehicle according to the present disclosure;
- Fig. 2 is a schematic diagram of an image of a vehicle body provided in an exemplary embodiment of the present disclosure;
- Fig. 3 is a block diagram of an apparatus of identifying a vehicle according to the present disclosure;
- Fig. 4 is a schematic diagram of determining the front end of a vehicle to be identified provided in an exemplary embodiment of the present disclosure;
- Fig. 5 is a schematic block diagram of an electronic device according to an exemplary embodiment of the present disclosure; and
- Fig. 6 is a schematic diagram of a program product in an exemplary embodiment of the present disclosure.

### DETAILED DESCRIPTION

Exemplary embodiments will now be described more fully with reference to the accompanying drawings. However, the exemplary embodiments may be embodied in a variety of forms, and should not be construed as being limited to the embodiments set forth herein. Rather, these embodiments are provided so that this disclosure will be thorough and complete, and the concept of the exemplary embodiments can be fully conveyed to those skilled in the art. The same reference numerals in the drawings denote the same or similar structures, and thus their detailed description will be omitted.

Furthermore, the described features, structures, or characteristics may be combined in any suitable manner in one or more embodiments. In the following description, numerous specific details are set forth to provide a thorough understanding of the embodiments of the disclosure. However, those skilled in the art will appreciate that the technical solution of the present disclosure may be practiced without one or more of the specific details, or other methods, components, materials, devices, steps, etc. can be used. In other instances, well-known structures, methods, devices, implementations, materials or operations are not shown or described in detail to avoid obscuring aspects of the present disclosure.

The block diagrams shown in the figures are merely functional entities and do not necessarily have to correspond to physically separate entities. That is, these functional entities may be implemented in software, or these functional entities or a part of them may be implemented in one or more modules hardened from software, or these functional entities may be implemented in different network and/or processor devices and/or microcontroller devices.

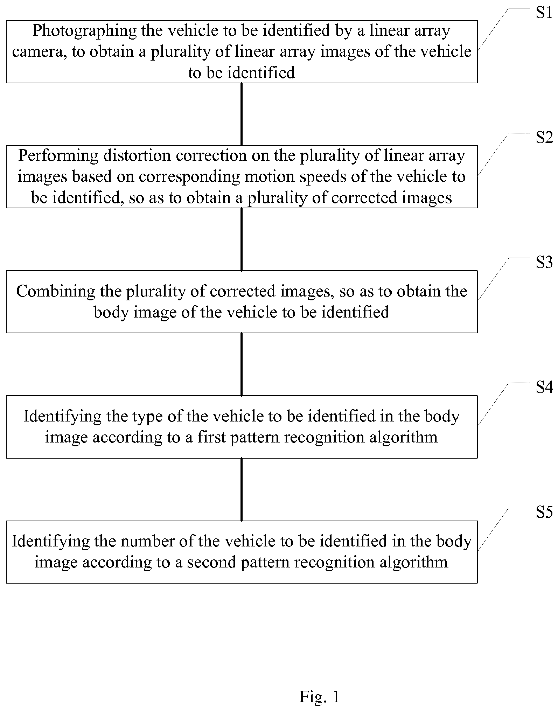

At first, a method of identifying a vehicle is provided in the exemplary embodiment. Referring to FIG. 1, the method of identifying a vehicle may include:
- Step S1: photographing the vehicle to be identified by a linear array camera, to obtain a plurality of linear array images of the vehicle to be identified;
- Step S2: performing distortion correction on the plurality of linear array images based on corresponding motion speeds of the vehicle to be identified, so as to obtain a plurality of corrected images;
- Step S3: combining the plurality of corrected images, so as to obtain the body image of the vehicle to be identified;
- Step S4: identifying the type of the vehicle to be identified in the body image according to a first pattern recognition algorithm; and
- Step S5: identifying the number of the vehicle to be identified in the body image according to a second pattern recognition algorithm.

According to the method of identifying a vehicle in the exemplary embodiment, on the one hand, the amount of information contained in the plurality of linear array images obtained by the linear array camera is large, so that the type and number of the vehicle can be simultaneously identified based on the plurality of linear array images; on the other hand, the distortion correction is performed on the plurality of linear array images based on the corresponding motion speeds of the vehicle to be identified, deformation of each linear array image is reduced, thereby the accuracy of identifying the type and number of the vehicle is improved; and, in addition, the linear array camera is small in size, and is easily to be installed and debugged, so the installation and commissioning costs can be reduced.

Hereinafter, each step in the method of identifying a vehicle in the exemplary embodiment will be further described.

In step S1, photographing the vehicle to be identified by a linear array camera, to obtain a plurality of linear array images of the vehicle to be identified.

In the exemplary embodiment, the linear array camera may be installed in the detection passage, and may be disposed on the left or right side of the vehicle to be identified, to obtain the body image of the left or right side of the vehicle to be identified. However, the disposing position of the linear array camera in the exemplary embodiment is not limited thereto. For example, according to specific needs, the linear array camera may be disposed above the vehicle to be identified as well, to obtain the body image of the vehicle to be identified in a view of bird's eye. Further for example, the linear array camera may be disposed at a plurality of orientations directing to the vehicle to be identified, to obtain body images of the vehicle to be identified from a plurality of orientations.

In the exemplary embodiment, whether the vehicle to be identified enters the detection passage may be detected by a speed and position measuring module of regional laser, and when it is detected that the vehicle to be identified enters the detection passage, the linear array camera is started up, such that the linear array camera continuously photographs the moving vehicle to be identified, to obtain a plurality of linear array images of the vehicle to be identified.

Further, the step of photographing the vehicle to be identified by a linear array camera, to obtain a plurality of linear array images of the vehicle to be identified may include: controlling the linear array camera to continuously photograph the vehicle to be identified according to a preset photographing frequency, so as to obtain the plurality of linear array images of the vehicle to be identified. The preset camera frequency may be set by the developer according to the application scenario, or may be calculated according to the speed at which the vehicle to be identified enters the detection passage, which is not specifically limited by this exemplary embodiment. It should be noted that, the specific process of calculating the preset photographing frequency according to the speed at which the vehicle to be identified enters the detection passage is a well-known technology, and thus will not be described herein.

Further, the linear array image obtained in the preset photographing frequency may be distorted when the speed of the vehicle to be identified changes, so, the step of controlling the linear array camera to continuously photograph the vehicle to be identified according to a preset photographing frequency, so as to obtain a plurality of linear array images of the vehicle to be identified may include: obtaining a motion speed of the vehicle to be identified in real time, then adjusting the preset photographing frequency according to the motion speed of the vehicle to be identified; and controlling the linear array camera to continuously photograph the vehicle to be identified according to the adjusted preset photographing frequency, so as to obtain the plurality of linear array images of the vehicle to be identified.

On the basis of the above, the step of performing distortion correction on the plurality of linear array images based on corresponding motion speeds of the vehicle to be identified, to obtain a plurality of corrected images may include: based on the corresponding motion speeds of the vehicle to be identified when respective linear array images are photographed, and in combination with motion speeds determined according to the preset photographing frequencies respectively corresponding to the corresponding motion speeds, performing a process of horizontally compressing or horizontally stretching on the respective linear array images respectively, to obtained the plurality of corrected images. It should be noted that the specific process of stretching and compression will be described in detail below, so, no further description is made here.

Since the amount of information contained in the plurality of linear array images obtained by the linear array camera is large, the type and number of the vehicle can be simultaneously identified based on the plurality of linear array images; and, in addition, the linear array camera is small in size, and is easily to be installed and debugged, so the installation and commissioning costs can be reduced.

In addition, when ambient brightness is low, if the exposure time of the linear array camera is too short, the definition of the image will be low. When ambient brightness is high, if the exposure time of the linear array camera is too long, the detail of the image will be poor. In order to obtain a linear array image with a high definition under the premise of reducing power consumption, the method may further include: obtaining the brightness of the photographing environment in real time, then adjusting the exposure time of the linear array camera according to the brightness of the photographing environment. In the exemplary embodiment, the brightness of the photographing environment is negatively correlated with the exposure time of the linear array camera. Specifically, when the brightness of the photographing environment is low, the exposure time of the linear array camera is increased, and when the brightness of the photographing environment is high, the exposure time of the linear array camera is decreased.

In addition, in order to obtain a clear image, it is necessary to supplement light for the object. At present, when a linear array camera is applied to find a view of a large object, since the distance between the object and the light source of the supplemented light is long, a laser light source is often adopted to supplement light for the object. However, since the laser light source is a monochromatic light source, the image of the object obtained by using the laser light source is a monochromatic image, furthermore, adopting the laser light source to supplement light for the object may harm human eyes, therefore, in order to obtain a color image without harming human eyes, the step of photographing the vehicle to be identified by a linear array camera, so as to obtain a plurality of linear array images of the vehicle to be identified may include providing a LED (Light Emitting Diode) light source, and controlling the LED light source to be operated in an operation mode, wherein the operation mode is to control the LED light source to enhance illumination brightness and flicker at a high frequency; and in the operating mode of the LED light source, photographing the vehicle to be identified by the linear array camera, so as to obtain the plurality of linear array images of the vehicle to be identified. In the exemplary embodiment, the high frequency refers to a frequency being not less than 1000 Hz, for example, being 2500 Hz, 3000 Hz and the like. In an embodiment, the flickering frequency of the LED source is from 1 KHz to 10 KHz. In the exemplary embodiment, the LED light source is a white light source, so a color image can be obtained after the light is supplemented by the LED light source. By controlling the LED light source to enhance illumination brightness and flicker at a high frequency, not only the requirements of supplementing light brightness can be met, but also the power consumption can be decreased, and human eyes apart from to be harmed.

Further, the LED light source in the exemplary embodiment is applied to vehicle identification, so a long-distance light supplementing is required, so that the LED light source adopts a LED light source with a narrow illumination angle. In the exemplary embodiment, the narrow illumination angle refers to illumination angle being less than 30 degrees, for example, being 15 degrees, 10 degrees, 7 degrees and the like. The LED light source of the narrow illumination angle may be a plurality of LEDs arranged in a line in a vertical direction. The LED source of the narrow illumination angle may be a plurality of LEDs arranged in a spherical shape as well, the outside of the plurality of LEDs arranged in a spherical shape is provided with two reflecting plates, and the angle between the two reflecting plates is narrow, so that the illumination angle of the plurality of LEDs arranged in a spherical shape is narrow. In addition, it should be noted that the LED light source with a narrow illumination angle in the exemplary embodiment is not limited thereto, and the LED light sources with narrow illumination angles realized by other manners are within the protection scope of the present disclosure as well.

In step S2, performing distortion correction on the plurality of linear array images based on corresponding motion speeds of the vehicle to be identified, to obtain a plurality of corrected images.

In the exemplary embodiment, while the linear array camera continuously photographs the vehicle to be identified, at the same time, a vehicle speed measuring module obtains, in real time, the motion speed of the vehicle to be identified when each corresponding linear array image is photographed; and then distortion correction on the corresponding respective linear array images is performed respectively based on corresponding motion speeds of the vehicle to be identified when each corresponding linear array image is photographed, to obtain a plurality of corrected images.

The manner in which the vehicle speed measuring module obtains the motion speed of the vehicle to be identified is various. For example, the motion speed of the vehicle to be identified can be directly measured by a speed sensor such as a speed measuring radar, and further for example, two position sensors such as two ground coils and/or photoelectric switches and/or electronic light curtains may be used to measure the times at which the vehicle to be identified passes through the two position sensors, and determines the motion speed of the vehicle to be identified based on the distance between the two position sensors.

The photographing frequency of the linear array camera is high, so there is little difference in the motion speeds of the vehicle to be identified when corresponding adjacent linear array image is photographed. Based on this, the motion speed of the vehicle to be identified can be obtained once at an interval of a preset number of linear array images. Taking a preset number of linear array image being 5 adjacent linear array images as an example, at first, the motion speed of the vehicle to be identified when the first linear array image is photographed is obtained, then the motion speed of the vehicle to be identified is obtained once at an interval of 5 adjacent linear array images, that is, the motion speed of the vehicle to be identified when the seventh linear array image is photographed is obtained, and then the motion speed of the vehicle to be identified when the thirteenth linear array image is photographed is obtained, and the above steps are repeated till the fully photographing of the vehicle to be identified is completed. It should be noted that the motion speeds corresponding to the first linear array image to the sixth linear array image are all the same, which is the motion speed of the vehicle to be identified when the first linear array image is photographed, the motion speeds corresponding to the seventh linear array image to the twelfth linear array image are all the same, which is the motion speed of the vehicle to be identified when the seventh linear array image is photographed, and so on, that is, the motion speeds corresponding to the subsequently-photographed linear array images are in accordance with the above rules. Through the above manner, the workload of the vehicle speed measuring module can be decreased without affecting the measurement accuracy, and the speed measuring cost can be decreased.

In addition, when the linear array camera obtains a plurality of linear array images of the vehicle to be identified at a preset photographing frequency, the step of performing distortion correction on the plurality of linear array images based on corresponding motion speeds of the vehicle to be identified, to obtain a plurality of corrected images may include: respectively obtaining corresponding motion speeds of the vehicle to be identified when the respective linear array images are photographed; and based on the corresponding motion speeds of the vehicle to be identified when respective linear array images are photographed, and in combination with motion speeds determined according to the preset photographing frequencies respectively corresponding to the corresponding motion speeds, performing a process of horizontally compressing or horizontally stretching on the respective linear array images respectively, so as to obtained the plurality of corrected images.

In the exemplary embodiment, the specific manner of obtaining corresponding motion speeds of the vehicle to be identified when the respective linear array images are photographed has been described in detail in step S2, so, details are not described herein again. In the process that the linear array camera photographs the vehicle to be identified, depending on the motion speeds of the vehicle to be identified, the areas of the vehicle to be identified contained in different linear array images photographed are different. Specifically, when the speed of the vehicle to be identified is large, the area of the vehicle to be identified contained in the corresponding linear array image is large, and when the speed of the vehicle to be identified is slow, the area of the vehicle to be identified contained in the corresponding linear array image is small, and the size of each linear array image is the same, so, if the area of the vehicle to be identified contained in a linear array image is large, there is a visual effect of compressing the linear array image, and if the area of the vehicle to be identified contained in a linear array image is small, there is a visual effect of stretching the linear array image.

On the basis of the above, when the corresponding motion speed of the vehicle to be identified is obtained when the linear array image is photographed, if the corresponding motion speed of the vehicle to be identified when the linear array image is photographed is greater than the motion speed determined by the preset photographing frequency, a process of horizontally stretching is performed on the linear array image; and if the corresponding motion speed of the vehicle to be identified when the linear array image is photographed is smaller than the motion speed determined by the preset photographing frequency, a process of horizontally compressing is performed on the linear array image.

In the above manner, even the motion speed of the vehicle to be identified is always changed when the plurality of linear array images of the vehicle to be identified are obtained, the influence on the image by the motion speed of the vehicle to be identified can be eliminated by performing distortion correction on the plurality of linear array images, which reduces the distortion of each linear array image, thereby improving the recognition accuracy of the type and number of the vehicle.

In step S3, combining the plurality of corrected images, to obtain the body image of the vehicle to be identified.

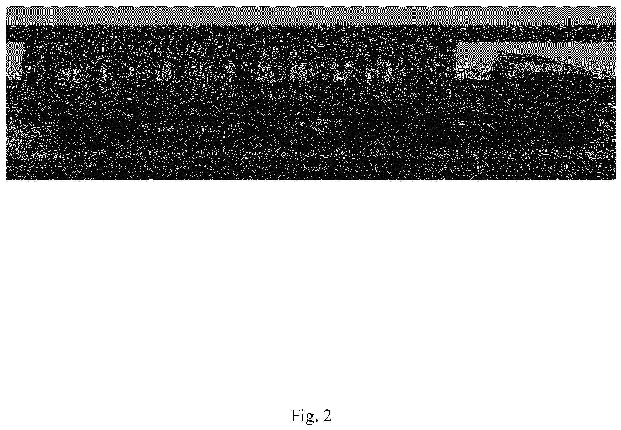

In the exemplary embodiment, a plurality of corrected images may be combined based on the order of the respective corrected images in photographing time, to obtain the body image of the vehicle to be identified. FIG. 2 shows a body image of the vehicle to be identified obtained through the above steps S1 to S3. From FIG. 2, the vehicle to be identified can be clearly identified as a container truck, and character information on the container, wherein the character information on the container on the container truck includes: Beijing Sinotrans Automobile Transportation Co., Ltd. and telephone number 010-85367654.

It should be noted that, in other exemplary embodiments of the present disclosure, the plurality of linear array images may be combined based on the order of the respective corrected images in photographing time, to obtain the body image of the vehicle without distortion correction, then the body image without distortion correction is subjected distortion correction based on the corresponding motion speeds of the vehicle to be identified when the respective linear array image are photographed, to obtain a body image with distortion correction.

In step S4, identify the type of the vehicle to be identified in the body image according to a first pattern recognition algorithm.

In the exemplary embodiment, the first pattern recognition algorithm may be any one of a proximity algorithm, a Bayesian algorithm, a principal component analysis algorithm, a linear discriminant analysis algorithm, a Gaussian mixture model and the like, and specifically may be determined according to the character of a project. The type of the vehicle to be identified may include a van, a truck, a car, a bus and the like, which is not specifically limited in this exemplary embodiment. Step S4 will be described below by taking a proximity algorithm as an example. The process of identifying the type of the vehicle to be identified in the body image based on the proximity algorithm may include: calculating a distance between a point corresponding to the vehicle to be identified and each point of a data set of known types; selecting k points with the smallest distances apart the point corresponding to the vehicle to be identified; counting probability of occurrence of the sample vehicle of each type among the k points; and determining the type with the highest probability as the type of the vehicle to be identified. It should be noted that the data set of the above-mentioned known types includes data sets of various types such as a data set of a car, a data set of a truck, a data set of a van, a data set of a bus and the like, so as to realize identification types of various vehicles.

In step S5, identifying the number of the vehicle to be identified in the body image according to a second pattern recognition algorithm.

In the exemplary embodiment, the second pattern recognition algorithm may be any one of a proximity algorithm, a Bayesian algorithm, a principal component analysis algorithm, a linear discriminant analysis algorithm, a Gaussian mixture model and the like, and specifically may be determined according to the character of a project. The number of the vehicle may be character information in a body image, wherein the character information includes at least one of a text character, a numeric character and an alphabetic character. Step S5 will be described below by taking a proximity algorithm as an example. The process of identifying the number of the vehicle to be identified in the body image based on the proximity algorithm may include: intercepting a character image to be identified of the vehicle to be identified in the body image; respectively calculating a distance between a point corresponding the character image to be identified and each point of a data set of known characters; selecting k points with the smallest distances apart the point corresponding to the character image to be identified; counting probability of occurrence of the sample character in the same data set among the k points; determining the character with the highest probability in the data set as the character corresponding to the character image to be identified, and repeating the above steps till the recognition of the vehicle number of the vehicle to be identified in the body image is completed. It should be noted that the above data set of the known characters includes: a numeric character data set, an alphabetic character data set and a text character data set, so as to realize recognition of different characters.

In addition, the steep of identifying the number of the vehicle to be identified in the body image according to a second pattern recognition algorithm may include: determining whether the type of the vehicle to be identified is a preset type; and when the type of the vehicle to be identified is the preset type, identifying the number of the vehicle to be identified in the body image according to the second pattern recognition algorithm.

In the exemplary embodiment, in the vehicle safety inspection, only the vehicle to be identified that can be loaded with cargo, such as a van, a truck and the like, needs to be subjected the number identification, so as to bind the number of the vehicle to be identified with the detection result, while the vehicle to be identified that is used only for carrying people, such as a car, a bus and the like, does not need to be subjected the number identification, so, when the type of the vehicle to be identified in the body image is identified, it can be determined via a type determination module whether the type of the vehicle to be identified is a preset type, and when it is determined the type of the vehicle to be identified is the preset type, the step of identifying the number of the vehicle to be identified in the body image is performed. The preset type may be a vehicle that can be loaded with cargo, such as a van, and the number may be character information on a vehicle that can be loaded with cargo, such as a van. Through the above judgment mechanism, the vehicle to be identified, the number of which needs to be identified, can be screened, and the workload of the vehicle number recognition is decreased, so that the cost of the vehicle number identification is decrease.

It should be noted that, although the various steps of the method of the present disclosure are described in a particular order in the drawings, it does not require or imply that the steps must be performed in the specific order, or that, to realize the desired results, all the steps shown must be performed. Additionally or alternatively, certain steps may be omitted, a plurality of steps may be combined into one step to execute, and/or one step may be decomposed into a plurality of steps to execute, and the like.

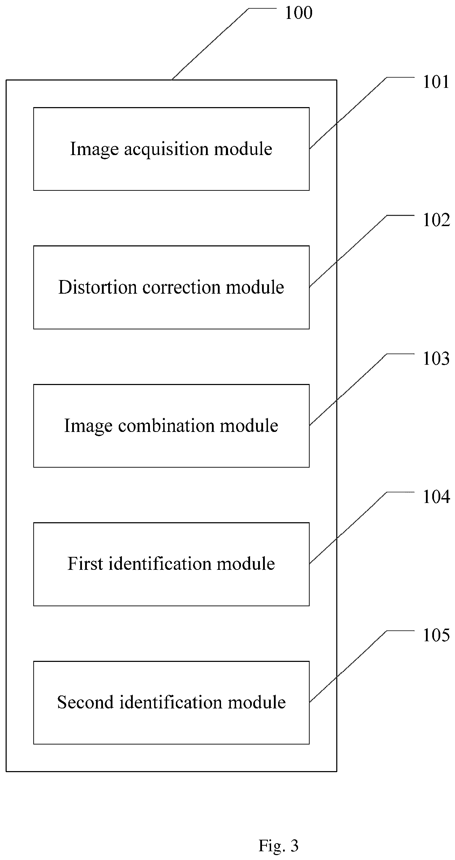

In an exemplary embodiment of the present disclosure, an apparatus of identifying a vehicle is further provided. As shown in FIG. 3, the apparatus of identifying a vehicle 100 may include: an image acquisition module 101, a distortion correction module 102, an image combination module 103, and a first identification module 104 and a second identification module 105, wherein:
- the image acquisition module 101 may be configured to photograph the vehicle to be identified by a linear array camera, to obtain a plurality of linear array images of the vehicle to be identified;
- the distortion correction module 102 may be configured to perform distortion correction on the plurality of linear array images based on corresponding motion speeds of the vehicle to be identified, so as to obtain a plurality of corrected images;
- the image combining module 103 may be configured to combine the plurality of corrected images, so as to obtain a body image of the vehicle to be identified;
- the first identification module 104 may be configured to identify a type of the vehicle to be identified in the body image according to a first pattern recognition algorithm; and
- the second identification module 105 may be configured to identify the number of the vehicle to be identified in the body image according to a second pattern recognition algorithm.

In an exemplary embodiment of the present disclosure, the image acquisition module may include:
- a light supplement unit, configured to provide an LED light source, and control the LED light source to be operated in an operation mode, wherein the operation mode is to control the LED light source to enhance illumination brightness and flicker at a high frequency; and
- an image obtaining unit, configured to, in the operating mode of the LED light source, photograph the vehicle to be identified by the linear array camera, so as to obtain the plurality of linear array images of the vehicle to be identified.

In an exemplary embodiment of the present disclosure, the LED light source may adopt a LED light source with a narrow illumination angle.

In an exemplary embodiment of the present disclosure, the apparatus may further include an adjustment module, configured to obtain the brightness of the photographing environment in real time, then adjust the exposure time of the linear array camera according to the brightness of the photographing environment.

In an exemplary embodiment of the present disclosure, the image acquisition module may include an image obtaining unit, configured to, control the linear array camera to continuously photograph the vehicle to be identified according to a preset photographing frequency, so as to obtain a plurality of linear array images of the vehicle to be identified.

In an exemplary embodiment of the present disclosure, the distortion correction module may include:
- a speed obtaining unit, configured to respectively obtain corresponding motion speeds of the vehicle to be identified when the respective linear array images are photographed; and
- a distortion correcting unit, configured to, based on the corresponding motion speeds of the vehicle to be identified when the respective linear array images are photographed, and in combination with motion speeds determined according to the preset photographing frequencies respectively corresponding to the corresponding motion speeds, perform a process of horizontally compressing or horizontally stretching on the respective linear array images respectively, so as to obtained the plurality of corrected images.

In an exemplary embodiment of the present disclosure, the image obtaining unit may include:
- a speed acquisition subunit, configured to obtain a motion speed of the vehicle to be identified in real time, then adjust the preset photographing frequency according to the motion speed of the vehicle to be identified; and
- an image acquisition subunit, configured to control the linear array camera to continuously photograph the vehicle to be identified according to the adjusted preset photographing frequency, so as to obtain a plurality of linear array images of the vehicle to be identified.

In an exemplary embodiment of the present disclosure, both the first pattern recognition algorithm and the second pattern recognition algorithm may be any one of a proximity algorithm, a Bayesian algorithm, a principal component analysis algorithm, a linear discriminant analysis algorithm, a Gaussian mixture model and the like.

In an exemplary embodiment of the present disclosure, the second identification module may include:
- a determining unit, configured to determine whether the type of the vehicle to be identified is a preset type, and;
- an identifying unit, configured to, when it is determined the type of the vehicle to be identified is the preset type, perform a step of identifying the number of the vehicle to be identified in the body image.

In an exemplary embodiment of the present disclosure, the preset type is a van.

In the above, the specific details of the respective modules of the apparatus of identifying a vehicle have been described in detail in the corresponding method of identifying a vehicle, and thus will not be repeated herein.

It should be noted that, although several modules or units of equipment for execution are mentioned in the above detailed description, such division is not mandatory. In fact, features and functions of two or more of the modules or units described above may be embodied in one module or unit in accordance with the embodiments of the present disclosure. Alternatively, the features and functions of one module or unit described above may be further divided into a plurality of modules or units.

According to an aspect of the present disclosure, a vehicle inspection system is provided, which may include the apparatus of identifying a vehicle of any of the above embodiments.

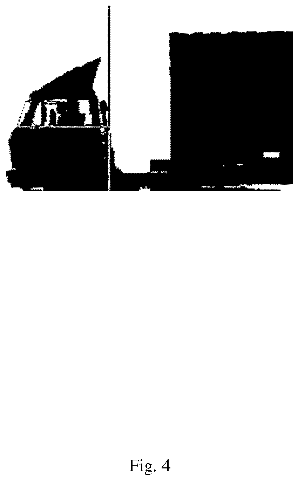

In the exemplary embodiment, for example, the above-described vehicle inspection system may include an apparatus of identifying a vehicle, a control system and a radiation imaging system. Wherein, the apparatus of identifying a vehicle can be used to identify the type and the number of the vehicle to be identified. The control system can be used to determine the position of the front end of the vehicle to be identified according to the type of the vehicle to be identified, and control the radiation source to emit radiation to illuminate the vehicle to be identified according to the front position of the vehicle. The radiation imaging system may include a radiation source for emitting radiation and a detector for detecting radiation transmitted through the vehicle to be identified and/or scattering ray, and for imaging the vehicle to be identified according to the ray detected via the detector. As described above, when the vehicle to be identified enters the detection passage, at first, the apparatus of identifying a vehicle identifies the type and the number of the vehicle, and then the control system can determine the position of the front end of the vehicle to be identified according to the type of the vehicle to be identified, as shown in FIG. 4, and according to the position of the front of the vehicle, controls the radiation source to emit radiation to illuminate the vehicle to be identified. When the front of the vehicle to be identified enters the ray scanning area, the control system controls the source to scan at low doses or not to scan. When the cabin of the vehicle to be identified enters the ray scanning area, the control system controls the source of radiation to scan at a higher dose. Finally, the radiation imaging system images the vehicle to be identified according to the ray detected by the detector, to obtain an inspection image of the vehicle to be identified, and binds the number of the vehicle to be identified with the inspection image, thereby completing the inspection of the vehicle to be identified.

In an exemplary embodiment of the present disclosure, an electronic device for implementing the above method is provided.

Those skilled in the art will appreciate that various aspects of the present disclosure may be implemented as a system, method, or program product. Therefore, various aspects of the present disclosure may be specifically realized in the form of a complete hardware implementation, a complete software implementation (including firmware, microcode, etc.), or a combination of hardware and software, which may be collectively referred to herein, "circuit", "module" or "system".

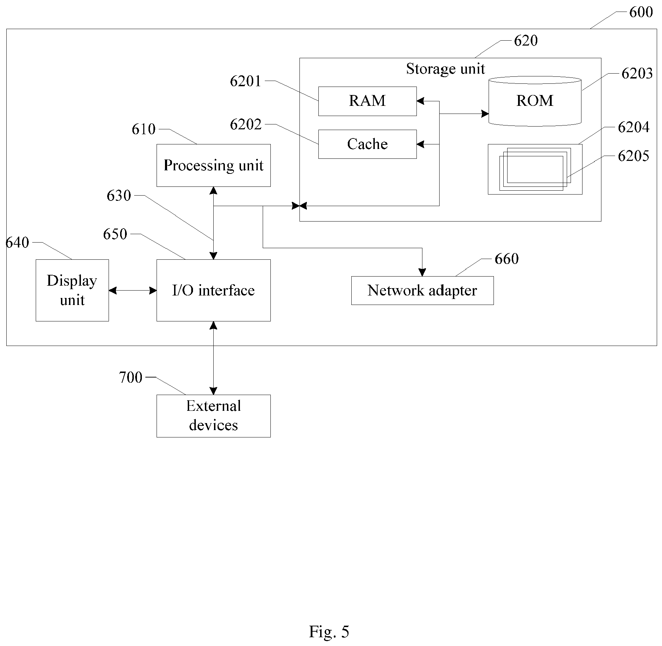

An electronic device 600 in accordance with an embodiment of the present disclosure is described below with reference to FIG. 5. The electronic device 600 shown in FIG. 5 is merely an example and should not impose any limitation on the function and use scope of the embodiments of the present disclosure.

As shown in FIG. 5, electronic device 600 is embodied in the form of a general purpose computing device. The components of the electronic device 600 may include, but are not limited to, at least one processing unit 610, at least one storage unit 620, a bus 630 connecting different system components (including the storage unit 620 and the processing unit 610) and a display unit 640.

Wherein, the storage unit stores program code, which can be executed by the processing unit 610, such that the processing unit 610 performs the steps according to various exemplary embodiments of the present disclosure described in the "detailed description" section of the present specification. For example, the processing unit 610 may perform, as shown in FIG. 1, step S1: photographing the vehicle to be identified by a linear array camera, to obtain a plurality of linear array images of the vehicle to be identified; step S2: performing distortion correction on the plurality of linear array images based on corresponding motion speeds of the vehicle to be identified, so as to obtain a plurality of corrected images; step S3: combining the plurality of corrected images, so as to obtain the body image of the vehicle to be identified; step S4: identifying the type of the vehicle to be identified in the body image according to a first pattern recognition algorithm; and step S5: identifying the number of the vehicle to be identified in the body image according to a second pattern recognition algorithm.

The storage unit 620 may include a readable medium in the form of a volatile storage unit, such as a random access storage unit (RAM) 6201 and/or a cache 6202, and may further include a read only storage unit (ROM) 6203.

The storage unit 620 may further include a program/utility 6204 having a set (at least one) of the program modules 6205, such program modules 6205 may include but not limited to: an operating system, one or more applications, other program modules and program data, and each of or some combination of the modules of these examples may include the implementations of network environment.

Bus 630 may one or more representative of several types of bus structures, including a memory unit bus or memory unit controller, a peripheral bus, a graphics acceleration port, a processing unit, or a local area bus using any of a variety of bus structures.

The electronic device 600 may communicate with one or more external devices 700 (eg, a keyboard, pointing device, Bluetooth device, etc.), and may communicate with one or more devices that enable a user to interact with the electronic device 600, and/or communicate with any device (e.g., router, modem, etc.) that enables the electronic device 600 to communication with one or more other computing devices. This communication may take place via an input/output (I/O) interface 650. The electronic device 600 may further communicate with one or more networks (eg, a local area network (LAN), a wide area network (WAN), and/or a public network, such as the Internet) through a network adapter 660. As shown, the network adapter 660 may communicate with other modules of the electronic device 600 via bus 630. It should be understood that, although not shown in the figures, other hardware and/or software modules may be utilized in conjunction with the electronic device 600, including but not limited to: microcode, device drivers, redundant processing units, external disk drive arrays, RAID (Redundant Array of Independent Disks) systems, tape drives. And data backup storage systems, etc.

Through the description of the above embodiments, those skilled in the art will readily understand that the example embodiments described herein may be implemented by software or by software in combination with necessary hardware. Therefore, the technical solution according to an embodiment of the present disclosure may be embodied in the form of a software product, which may be stored in a non-volatile storage medium (which may be a CD-ROM (Compact Disk-Read Only Memory), a USB (Universal Serial Bus) flash drive, a mobile hard disk, etc.) or on a network. A number of instructions are included to cause a computing device (which may be a personal computer, server, terminal device, or network device, etc.) to perform a method in accordance with an embodiment of the present disclosure.

In an exemplary embodiment of the present disclosure, a computer readable storage medium is further provided, on which a program product is stored and capable of implementing the above method of the present specification. In some possible implementations, aspects of the present disclosure may be embodied in the form of a program product including program code, when the program product runs on a terminal device, the program code causes the terminal device to perform the steps according to various exemplary embodiments of the present disclosure described in the "detailed description" section of the present specification.

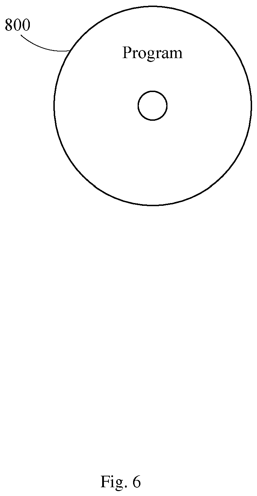

Referring to Fig. 6, a program product 800 for implementing the above method according to various exemplary embodiments of the present disclosure is illustrated, which may employ a portable compact disk read only memory (CD-ROM) and includes program code, and may run in a terminal device, for example on a personal computer. However, the program product of the present disclosure is not limited thereto, and in the present disclosure, the readable storage medium may be any tangible medium containing or storing a program that may be used by or in connection with an instruction execution system, apparatus or device.

The program product may employ any one or combination of more readable media. The readable medium may be a readable signal medium or a readable storage medium. The readable storage medium may be, for example, but not limited to, an electronic, magnetic, optical, electromagnetic, infrared, or semiconductor system, apparatus, or device, or any combination of the above. More specific examples (non-exhaustive lists) of readable storage media include: electrical connections with one or more wires, portable disks, hard disks, random access memory (RAM), read only memory (ROM), erasable Programmable read-only memory (EPROM or flash memory), optical fiber, portable compact disk read only memory (CD-ROM), optical storage device, magnetic storage device, or any suitable combination of the foregoing.

The computer readable signal medium may include data signal that is propagated in a baseband or as part of a carrier, carrying readable program code. Such propagated data signals may take a variety of forms including, but not limited to, electromagnetic signals, optical signals, or any suitable combination of the foregoing. The readable signal medium may be any readable medium other than a readable storage medium that may transmit, propagate or transport a program for use by or in connection with an instruction execution system, apparatus or device.

Program code embodied on a readable medium may be transmitted by any suitable medium, including but not limited to wireless, line, optical cable, RF (Radio Frequency), etc., or any suitable combination of the foregoing.

Program code for performing the operations of the present disclosure may be written in any combination of one or more programming languages, including an object oriented programming language such as Java, C++, etc., including conventional procedural programming language, such as the "C" language or a similar programming language. The program code may execute entirely on the user computing device, partially on the user device, as a stand-alone software package, partially on the remote computing device and partially on the user computing device, or entirely on the remote computing device or server. In the case of a remote computing device, the remote computing device may be connected to the user computing device via any kind of network, including a local area network (LAN) or a wide area network (WAN), or may be connected to an external computing device (eg, provided using an Internet service) Businesses are connected via the Internet).

Further, the above-described drawings are merely illustrative of the processes included in the method according to the exemplary embodiments of the present disclosure, and are not intended to limit the present disclosure. It is easy to understand that the processing shown in the above figures does not indicate or limit the chronological order of these processes. In addition, it is easy to understand that these processes may be performed synchronously or asynchronously, for example, in a plurality of modules.

From consideration of the specification and practice of the present disclosure, those skilled in the art will easily think of other embodiments of the present disclosure. The present application is intended to cover any variations, uses, or adaptations of the present disclosure, which are in accordance with the general principles of the present disclosure and include common general knowledge or conventional technical means in the art that are not disclosed in the present disclosure. The specification and examples are to be regarded as illustrative only, with a true scope and spirit of the present disclosure being indicated by the following claims.

It should be understood that the present disclosure is not limited to the precise structures that have been described above and illustrated in the drawings. The scope of the disclosure is limited only by the appended claims..

## Claims

1. A method of identifying a vehicle, comprising:
photographing (S1) a vehicle to be identified by a linear array camera, to obtain a plurality of linear array images of the vehicle to be identified;
performing (S2) distortion correction on the plurality of linear array images based on corresponding motion speeds of the vehicle to be identified, so as to obtain a plurality of corrected images;
combining (S3) the plurality of corrected images, so as to obtain a body image of the vehicle to be identified;
identifying (S4) a type of the vehicle to be identified in the body image according to a first pattern recognition algorithm; and
identifying (S5) a number of the vehicle to be identified in the body image according to a second pattern recognition algorithm.

2. The method of identifying a vehicle according to claim 1, wherein the step of photographing (S1) the vehicle to be identified by the linear array camera to obtain the plurality of linear array images of the vehicle to be identified comprises:
providing an LED light source, and controlling the LED light source to be operated in an operation mode, wherein the operation mode is to control the LED light source to enhance illumination brightness and flicker at a high frequency; and
in the operating mode of the LED light source, photographing the vehicle to be identified by the linear array camera, so as to obtain the plurality of linear array images of the vehicle to be identified.

3. The method of identifying a vehicle according to claim 1, wherein the step of performing (S2) distortion correction on the plurality of linear array images based on corresponding motion speeds of the vehicle to be identified, so as to obtain a plurality of corrected images comprises:
controlling the linear array camera to continuously photograph the vehicle to be identified according to a preset photographing frequency, so as to obtain the plurality of linear array images of the vehicle to be identified.

4. The method of identifying a vehicle according to claim 3, wherein the step of performing (S2) distortion correction on the plurality of linear array images based on corresponding motion speeds of the vehicle to be identified, so as to obtain a plurality of corrected images comprises:
respectively obtaining corresponding motion speeds of the vehicle to be identified when the respective linear array images are photographed; and
based on the corresponding motion speeds of the vehicle to be identified when respective linear array images are photographed, and in combination with motion speeds determined according to the corresponding preset photographing frequencies, performing a process of horizontally compressing or horizontally stretching on the respective linear array images respectively, so as to obtained the plurality of corrected images.

5. The method of identifying a vehicle according to claim 3, wherein the step of controlling the linear array camera to continuously photograph the vehicle to be identified according to a preset photographing frequency, so as to obtain the plurality of linear array images of the vehicle to be identified include:
obtaining a motion speed of the vehicle to be identified in real time, then adjusting the preset photographing frequency according to the motion speed of the vehicle to be identified; and
controlling the linear array camera to continuously photograph the vehicle to be identified according to the adjusted preset photographing frequency, so as to obtain the plurality of linear array images of the vehicle to be identified.

6. The method of identifying a vehicle according to claim 1, wherein both the first pattern recognition algorithm and the second pattern recognition algorithm are any one of a proximity algorithm, a Bayesian algorithm, a principal component analysis algorithm, a linear discriminant analysis algorithm and a Gaussian mixture model.

7. The method of identifying a vehicle according to claim 1, wherein the step of identifying (S5) a number of the vehicle to be identified in the body image according to a second pattern recognition algorithm comprises:
determining whether the type of the vehicle to be identified is a preset type; and
when the type of the vehicle to be identified is the preset type, identifying the number of the vehicle to be identified in the body image according to the second pattern recognition algorithm.

8. A apparatus (100) of identifying a vehicle, comprising:
an image acquisition module (101), configured to photograph a vehicle to be identified by a linear array camera, to obtain a plurality of linear array images of the vehicle to be identified;
a distortion correction module (102), configured to perform distortion correction on the plurality of linear array images based on corresponding motion speeds of the vehicle to be identified, so as to obtain a plurality of corrected images;
an image combining module (103), configured to combine the plurality of corrected images, so as to obtain a body image of the vehicle to be identified;
a first identification module (104), configured to identify a type of the vehicle to be identified in the body image according to a first pattern recognition algorithm; and
a second identification module (105), configured to identify a number of the vehicle to be identified in the body image according to a second pattern recognition algorithm.

9. The apparatus of identifying a vehicle according to claim 8, wherein the image acquisition module (101) comprises:
a light supplement unit, configured to provide an LED light source, and control the LED light source to be operated in an operation mode, wherein the operation mode is to control the LED light source to enhance illumination brightness and flicker at a high frequency; and
an image obtaining unit, configured to, in the operating mode of the LED light source, photograph the vehicle to be identified by the linear array camera, so as to obtain the plurality of linear array images of the vehicle to be identified.

10. The apparatus of identifying a vehicle according to claim 8, wherein the image acquisition module (101) comprises:
an image obtaining unit, configured to, control the linear array camera to continuously photograph the vehicle to be identified according to a preset photographing frequency, so as to obtain the plurality of linear array images of the vehicle to be identified.

11. The apparatus of identifying a vehicle according to claim 10, wherein the distortion correction module (102) comprises:
a speed obtaining unit, configured to respectively obtain corresponding motion speeds of the vehicle to be identified when the respective linear array images are photographed; and
a distortion correcting unit, configured to, based on the corresponding motion speeds of the vehicle to be identified when the respective linear array images are photographed, and in combination with motion speeds determined according to the preset photographing frequencies, perform a process of horizontally compressing or horizontally stretching on the respective linear array images respectively, so as to obtained a plurality of corrected images.

12. The apparatus of identifying a vehicle according to claim 10, wherein the image obtaining unit comprises:
a speed acquisition subunit, configured to obtain a motion speed of the vehicle to be identified in real time, then adjust the preset photographing frequency according to the motion speed of the vehicle to be identified; and
an image acquisition subunit, configured to control the linear array camera to continuously photograph the vehicle to be identified according to the adjusted preset photographing frequency, so as to obtain the plurality of linear array images of the vehicle to be identified.

13. A vehicle inspection system, comprising the apparatus of identifying a vehicle according to any one of claims 8 to 12.

14. A computer program, which, when executing on a processor of the apparatus of identifying a vehicle according any one of claims 8 to 12, performs a method of identifying a vehicle according to any one of claims 1 to 7 correspondingly.

15. An electronic device (600), comprising:
processor (610); and
a memory for storing executable instructions of the processor,
wherein the processor is configured to execute the method of identifying a vehicle according to any one of claims 1 to 7 by executing the executable instruction.
